# EUROPEAN PATENT SPECIFICATION

(11) **EP 2 798 727 B1**
(45) Date of publication and mention of the grant of the patent: **22.03.2017**
(21) Application number: 12798241.1
(22) Date of filing: 26.11.2012
(51) Int. Cl.: H02K 11/00, H02K 5/22

(54) **A PERMANENT MAGNET SYNCHRONOUS ELECTRIC MOTOR**
ELEKTRISCHER PERMANENTMAGNET-SYNCHRONMOTOR
MOTEUR ÉLECTRIQUE SYNCHRONE À AIMANT PERMANENT

(30) Priority: 26.12.2011 TR 201112960
(43) Date of publication of application: 05.11.2014
(73) Proprietor: Arçelik Anonim Sirketi, 34950 Istanbul (TR)
(72) Inventor: ACIKGOZ, Harum, Tuzla, 34950 Istanbul (TR); EKIN, Cihad, Tuzla, 34950 Istanbul (TR); IMAT, Yakup, Tuzla, 34950 Istanbul (TR); SONMEZ, Emin Gultekin, Tuzla, 34950 Istanbul (TR); TURK, Reyhan, Tuzla, 34950 Istanbul (TR)
(86) International application number: PCT/EP2012/073553
(87) International publication number: WO 2013/098001

(56) References cited:
- DE-A1-102009 049 737
- US-A- 5 635 781
- US-A1- 2009 096 330
- US-A1- 2010 310 390

## Description

The present invention relates a permanent magnet synchronous electric motor which operates the pumps of household appliances such as the dishwasher or washing machine.

The permanent magnet synchronous electric motors (PMSM) are used for operating the circulation or discharge pumps in household appliances such as the dishwasher or washing machine. The electric motors used in pumps can operate in water or humid environments and the outer surfaces of the stator and rotor are covered with plastic material in order to prevent them from rusting by providing leak-proofing. The permanent magnet synchronous motor is controlled by a printed circuit board (PCB) that is disposed inside the cover that encases the stator. Generally, the connectors disposed on the stator and the printed circuit board are used for the phase connections of the printed circuit board and the electric motor. The cables that extend from the connector in the printed circuit board to the stator, are attached to the connector whereto the ends of the stator phase windings are joined, thus the connection of the printed circuit board to the electric motor is maintained; however, the connectors occupy a lot of space in the electric motor, the cable-connector connections are generally performed by manual labor hence production time is prolonged and costs increase.

In the European Patent No. EP1777415, in a pump comprising an integrated motor, the connection of the motor and the printed circuit board that drives the motor is explained. The connection between the motor and the printed circuit board is provided by the contact of a resilient connector attached to the motor phase windings with the plate containing the electronic circuit (PCB).

US patent application US 5 635 781 A discloses an electric motor connected to a printed circuit board through terminal pins arranged on the stator and sockets arranged on the printed circuit board.

The aim of the present invention is the realization of a permanent magnet synchronous electric motor wherein time losses during production are prevented.

The electric motor realized in order to attain the aim of the present invention, explicated in the first claim and the respective claims thereof, is suitable for use in operating the circulation or water discharge pumps of household appliances like the dishwasher and washing machine, comprises a printed circuit board that provides electronic control, a stator electrically connected to the printed circuit board, connection terminals mounted to ends of the phase windings disposed in the stator, known as "mag mate" or IDC (insulation displacement connector), each one having a pin extending towards the printed circuit board, plastic terminal housings disposed on the stator and wherein the terminals are placed, and sockets disposed on the printed circuit board wherein the pins are inserted. A pin support member is mounted on the terminal housings in the stator by fitting over the pins. The pin support member is seated on the terminal housings by being inserted into the terminal pins by means of the pin holes thereon, thus the rigidity of the pins is increased and the pins with rather thin structure are prevented from bending during production.

In the present invention, the pin support member is produced as a single piece from plastic material, having recesses at the lower side providing it to be seated on the terminal housings. The pin support member furthermore has upper support extensions, extending from its upper surface upwards and surrounding the pins and lower support extensions bearing against the lateral side of the terminal housings.

In the present invention, guide extensions that extend from between the terminal housings towards the printed circuit board are disposed on the stator and guide holes through which the guide extensions pass are disposed on the printed circuit board.

The electric motor is a three-phase brushless direct current motor and the electrical connection is provided by three pins that extend from terminals connected to the three-phase windings towards the printed circuit board.

The pin support member is mounted on the pins that provide electrical connection between the stator and the printed circuit board, the pins are prevented from bending and getting caught on ah obstruct during production by increasing rigidness and the time losses that may occur during production are minimized.

The electric motor realized in order to attain the aim of the present invention is illustrated in the attached claims, where:

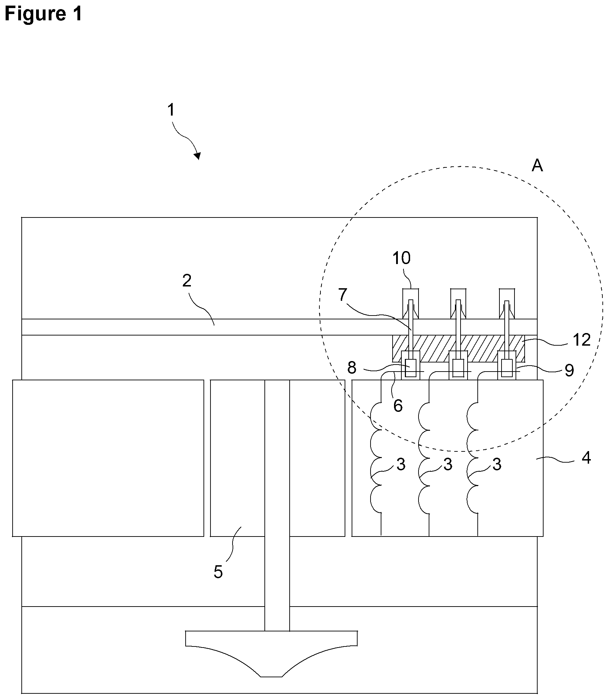

Figure 1 - is the schematic view of an electric motor.

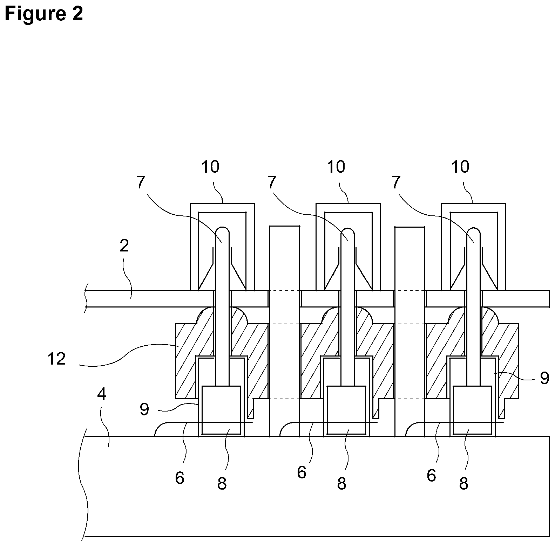

Figure 2 - is the view of detail A in Figure 1.
Figure 3 - is the exploded view of a stator, a printed circuit board and a pin support member.

The elements illustrated in the figures are numbered as follows:
1. Electric motor
2. Printed circuit board
3. Phase winding
4. Stator
5. Rotor
6. Winding end
7. Pin
8. Terminal
9. Terminal housing
10. Socket
11. Pin hole
12. Pin support member
13. Recess
14. Upper support extension
15. Lower support extension
16. Guide extension
17. Guide hole

The electric motor (1) suitable for use in circulation or discharge pumps of household appliances like the dishwasher or washing machine comprises a printed circuit board (2) (PCB) whereon the electronic control circuit is arranged, a stator (4) electrically connected to the printed circuit board (2), having more than one phase winding (3) formed of conductive wires wound/arranged to the stator package (stator core) made of magnetic laminations, a rotor (5) that makes rotational movement in the magnetic field generated by the phase currents applied from the printed circuit board (2) to the phase windings (3), more than one winding end (6), extending outward from the stator (4), providing electrical connections to be made to the phase windings (3), more than one terminal (8) each one having a pin (7), whereto the winding ends (6) are attached, of IDC (insulation displacement connector) type, named as "mag mate", more than one terminal housing (9), disposed on the stator (4), wherein the terminals (8) are placed such that the pins (7) extend outwards and whereat the terminals (8) are attached by the winding ends (6) and more than one socket (10), arranged on the printed circuit board (2), completing the electrical connection between the printed circuit board (2) and the stator (4) by the ends of the pins (7) being inserted therein while the printed circuit board (2) is disposed on the stator (4).

The electric motor (1) of the present invention comprises a pin support member (12), disposed between the terminal housings (9) and the printed circuit board (2) by being fitted over the pins (7), having more than one pin hole (11) that guides the pins (7) and through which the pins (7) are inserted, preventing bending by increasing the rigidness of the pins (7) during production.

During the production of the electric motor (1), the printed circuit board (2) is disposed horizontally on the stator (4), the pins (7) that extend upwards from the terminal housings (9) on the stator (4) are inserted into the sockets (10) on the printed circuit board (2), thus the electrical connection between the printed circuit board (2) and the stator (4) is provided. The pin support member (12) of the present invention is seated on the terminal housings (9) by being fitted over the pins (7) by means of the pin holes (11) before the printed circuit board (2) is mounted on the stator (4), thus the rigidness of the pins (7) extending upwards from the terminal housings (9) is provided. The pin support member (12) prevents the pins (7) from bending right or left by surrounding, that are of quite thin structure, for example 0.50 mm in diameter and having the risk of bending especially during automatic production. Since the pins (7) do not lose their vertical positions, they are inserted into the sockets (10) without getting caught, the printed circuit board (2) is connected to the stator (4) without problems and production losses are avoided.

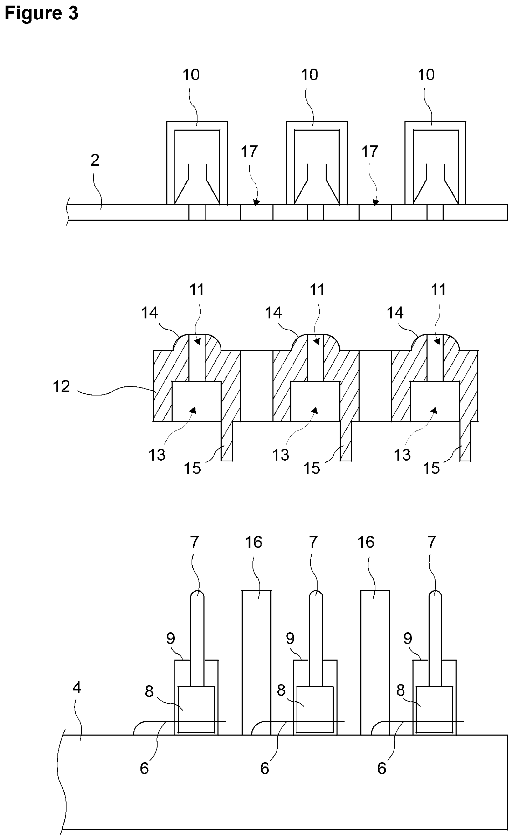

In the present invention, the pin support member (12) is produced as a single piece from plastic material. The pin support member (12) comprises more than one recess (13) arranged on its lower side, providing the pin support member (12) to be seated on the terminal housings (9), more than one upper support extension (14) around the pin holes (11), extending upwards from its upper surface and surrounding the pins (7) to increase rigidness and one or more than one lower support extension (15) bearing against the lateral side of the terminal housings (9), providing the pin support member (12) to be seated on the terminal housings (9), by the recesses (13) centering the terminal housings (9) (Figure 3).

In the present invention, the electric motor (1) comprises one or more than one guide extension (16) produced from plastic material, disposed on the stator (4), extending from between the terminal housings (9) towards the printed circuit board (2) and passing therethrough and one or more than one guide hole (17) arranged on the printed circuit board (2) and through which the guide extensions (16) pass (Figure 3). The guide extensions (16) and the guide holes (17) provide centering during production while the printed circuit board (2) is disposed on the stator (4) by robotic mechanisms, and the quite sensitive concentric positions of the pins (7) and sockets (10) are maintained.

In an embodiment of the present invention, the electric motor (1) is a three-phase brushless direct current motor and comprises three pins (7) that are mounted to the sockets (10) by extending from the terminals (8) connected to the winding ends (6) to the printed circuit board (2).

During the production of the electric motor (1) of the present invention, the pin support member (12) placed between the printed circuit board (2) and the terminal housings (9) on the stator (4), is mounted on the terminal (8) pins (7) that extend from the stator (4) to the printed circuit board (2) and the pins (7) are prevented from bending right or left by increasing rigidness. While the printed circuit board (2) is disposed on the stator (4) during production, the pins (7) are fitted into the sockets (10) on the printed circuit board (2) without being getting caught on any obstructs and time losses in production are avoided.

It is to be understood that the present invention is not limited by the embodiments disclosed above and a person skilled in the art can easily introduce different embodiments. These should be considered within the scope of the protection postulated by the claims of the present invention.

## Claims

1. An electric motor (1) comprising a printed circuit board (PCB) (2), a stator (4) electrically connected to the printed circuit board (2), having more than one phase winding (3), a rotor (5), more than one winding end (6), extending outwards from the stator (4), providing electrical connections to be made to the phase windings (3), more than one terminal (8) each having a pin (7), extending towards the printed circuit board (2), whereto the winding ends (6) are attached, more than one terminal housing (9) disposed on the stator (4), wherein the terminals (8) are placed such that the pins (7) extend outwards and whereat the terminals (8) are attached by the winding ends (6) and more than one socket (10) arranged on the printed circuit board (2), completing the electrical connection between the printed circuit board (2) and the stator (4) by the ends of the pins (7) being inserted therein,
**characterized by** a pin support member (12) disposed between the terminal housings (9) and the printed circuit board (2) by being fitted over the pins (7), having more than one pin hole (11) that guides the pins (7),
wherein the pin support member (12) is produced from plastic material as a single piece,further **characterized by** one or more than one guide extension (16) produced from plastic material, disposed on the stator (4), extending from between the terminal housings (9) towards the printed circuit board (2) and passing therethrough and one or more than one guide hole (17) arranged on the printed circuit board (2) and through which the guide extensions (16) pass.

2. An electric motor (1) as in Claim 1, **characterized by** the pin support member (12) comprising more than one recess (13) arranged on its lower side, providing the pin support member (12) to be seated on the terminal housings (9).

3. An electric motor (1) as in Claim 1 or 2, **characterized by** the pin support member (12) comprising more than one upper support extension (14) around the pin holes (11), extending upwards from its upper surface and surrounding the pins (7).

4. An electric motor (1) as in any one of the above Claims, **characterized by** the pin support member (12) comprising one or more than one lower support extension (15) bearing against the lateral side of the terminal housings (9).

5. An electric motor (1) as in any one of the above Claims, which is a three-phase brushless direct current motor, **characterized by** three pins (7) that are mounted to the sockets (10) by extending from the terminals (8) connected to the winding ends (6) to the printed circuit board (2).

## Patentansprüche

1. Elektromotor (1), umfassend eine Leiterplatte (PCB) (2), einen Stator (4), der elektrisch mit der Leiterplatte (2) verbunden ist und mehrere Phasenwicklungen (3) aufweist, einen Rotor (5), mehrere Wicklungsenden (6), die sich vom Stator (4) nach außen erstrecken und es ermöglichen, dass elektrische Verbindungen mit den Phasenwicklungen (3) hergestellt werden, mehrere Anschlüsse (8), die jeweils einen Stift (7) aufweisen, der sich zur Leiterplatte (2) erstreckt und an dem die Wicklungsenden (6) angebracht sind, mehrere Anschlussgehäuse (9), die am Stator (4) angeordnet sind, worin die Anschlüsse (8) derart angeordnet sind, dass sich die Stift (7) nach außen erstrecken, und woran die Anschlüsse (8) durch die Wicklungsenden (6) angebracht sind, und mehrere Buchsen (10), die an der Leiterplatte (2) angeordnet sind und die elektrische Verbindung zwischen der Leiterplatte (2) und dem Stator (4) vervollständigen, indem die Enden der Stifte (7) in sie eingeführt sind,
**gekennzeichnet durch** ein Stiftträgerelement (12), das zwischen den Anschlussgehäusen (9) und der Leiterplatte (2) angeordnet ist, indem es auf die Stifte (7) gesetzt ist, und mehrere Stiftbohrungen (11) aufweist, die die Stifte (7) führen,
wobei das Stiftträgerelement (12) einstückig aus einem Kunststoffmaterial hergestellt ist, außerdem **gekennzeichnet durch** eine oder mehrere Führungsverlängerungen (16), die aus Kunststoffmaterial hergestellt sind, am Stator (4) angeordnet sind, sich von zwischen den Anschlussgehäusen (9) zur Leiterplatte (2) hin erstrecken und **dadurch** hindurch verlaufen, und mehrere Führungsbohrungen (17), die an der Leiterplatte (2) angeordnet sind und **durch** die die Führungsverlängerungen (16) verlaufen.

2. Elektromotor (1) nach Anspruch 1, **dadurch gekennzeichnet, dass** das Stiftträgerelement (12) mehrere Vertiefungen (13) umfasst, die an seiner Unterseite angeordnet sind und dafür sorgen, dass das Stiftträgerelement (12) auf den Anschlussgehäusen (9) ruht.

3. Elektromotor (1) nach Anspruch 1 oder 2, **dadurch gekennzeichnet, dass** das Stiftträgerelement (12) mehrere obere Trägerverlängerungen (14) um die Stiftbohrungen (11) umfasst, die sich von seiner Oberseitenfläche erstrecken und die Stifte (7) umgeben.

4. Elektromotor (1) nach einem der vorangehenden Ansprüche, **dadurch gekennzeichnet, dass** das Stiftträgerelement (12) eine oder mehrere untere Trägerverlängerungen (15) umfasst, die an der lateralen Seite der Anschlussgehäuse (9) anliegen.

5. Elektromotor (1) nach einem der vorangehenden Ansprüche, der ein bürstenloser Dreiphasengleichstrommotor ist, **gekennzeichnet durch** drei Stifte (7), die an den Buchsen (10) montiert sind, indem sie sich von den Anschlüssen (8), die mit den Wicklungsenden (6) verbunden sind, bis zur Leiterplatte (2) erstrecken.

## Revendications

1. Un moteur électrique (1) comprenant un circuit imprimé (PCB) (2), un stator (4) qui est connecté électriquement au circuit imprimé (2) et qui présente plus d'un enroulement de phase (3), un rotor (5), plus d'une extrémité d'enroulement (6) qui s'étend vers l'extérieur à partir du stator (4) et qui permet la réalisation des connexions électriques aux enroulements de phase (3), plus d'une borne (8) chacune présentant une goupille (7) et s'étendant vers le circuit imprimé (2), à laquelle les extrémités d'enroulement (6) sont fixées, plus d'un logement de borne (9) qui est disposé sur le stator (4) et dans lequel les bornes (8) sont placées de telle sorte que les goupilles (7) s'étendent vers l'extérieur et auquel les bornes (8) sont fixées par les extrémités d'enroulement (6) et plus d'une prise (10) qui est arrangée sur le circuit imprimé (2) et qui achève la connexion électrique entre le circuit imprimé (2) et le stator (4) par les extrémités des goupilles (7) y étant insérées,
**caractérisé par** un élément de support de goupille (12) qui est disposé entre les logements de borne (9) et le circuit imprimé (2) en étant monté sur les goupilles (7) et qui présente plus d'un trou de goupille (11) qui guide les goupilles (7),
où l'élément de support de goupille (12) est produit d'un matériau plastique comme une seule pièce, **caractérisé en outre par** une ou plus d'une extension de guidage (16) en matière plastique, qui est disposée sur le stator (4), qui s'étend à partir de la région entre les logements de borne (9) vers le circuit imprimé (2) et qui traverse celle-ci et un ou plus d'un trou de guidage (17) qui est arrangé sur le circuit imprimé (2) et à travers lequel les extensions de guidage (16) passent.

2. Un moteur électrique (1) selon la Revendication 1, **caractérisé par** l'élément de support de goupille (12) comprenant plus d'un évidement (13) qui est arrangé sur son côté inférieur et qui permet à l'élément de support de goupille (12) d'être monté sur les logements de borne (9).

3. Un moteur électrique (1) selon la Revendication 1 ou 2, **caractérisé par** l'élément de support de goupille (12) comprenant plus d'une extension supérieure de support (14) autour des trous de goupille (11), qui s'étend vers le haut à partir de sa surface supérieure et qui entoure les goupilles (7).

4. Un moteur électrique (1) selon l'une quelconque des revendications précédentes, **caractérisé par** l'élément de support de goupille (12) comprenant une ou plus d'une extension inférieure de support (15) qui s'appuie sur le côté latéral des logements de borne (9).

5. Un moteur électrique (1) selon l'une quelconque des revendications précédentes, qui est un moteur à courant continu sans collecteur à trois phases, **caractérisé par** trois goupilles (7) qui sont montées aux prises (10) en s'étendant à partir des bornes (8) connectées aux extrémités d'enroulement (6) au circuit imprimé (2).
